# FASCICULE DE BREVET EUROPEEN

(11) **EP 0 645 169 B1**
(45) Date de publication et mention de la délivrance du brevet: **23.07.1997**
(21) Numéro de dépôt: 94402101.3
(22) Date de dépôt: 21.09.1994
(51) Int. Cl.: B01D 21/00, B01D 17/06, B03C 5/02

(54) **Perfectionnements aux procédés et dispositifs de séparation des particules contenues dans un fluide**
Verbesserung der Verfahren und Vorrichtungen zum Abtrennen von Teilchen in einem Fluidstrom
Improvements to methods and devices for separating particles from a fluid

(30) Priorité: 23.09.1993 FR 9311346
(43) Date de publication de la demande: 29.03.1995
(73) Titulaire: Ajdari, Armand, F-75007 Paris (FR); Lewiner, Jacques, 92210 Saint-Cloud (FR); Prost, Jacques, 75012 Paris (FR); Viovy, Jean-Louis, F-75013 Paris (FR)
(72) Inventeur: Ajdari, Armand, F-75007 Paris (FR); Lewiner, Jacques, 92210 Saint-Cloud (FR); Prost, Jacques, 75012 Paris (FR); Viovy, Jean-Louis, F-75013 Paris (FR)
(74) Mandataire: Burbaud, Eric

(56) Documents cités:
- EP-A- 0 080 618
- AU-B- 522 029
- US-A- 4 204 934
- US-A- 5 240 618

## Description

L'invention est relative aux procédés et dispositifs pour séparer au sein d'un fluide certaines des particules contenues dans celui-ci, telles que notamment des particules colloïdales (pigments, grains de silice, d'or, latex...) et biologiques (virus, cellules, bactéries, protéines, fragments d'ADN...) contenues dans un liquide, ou bien des grains ou billes de petits diamètres (diamètres par exemple compris entre 0,5 et 5 mm) en métal, matière plastique, matière minérale (silice...), contenues dans un gaz, tel que l'air ambiant, ou encore les composants d'un mélange gazeux (oxygène, azote, etc.), ou même des isotopes contenus dans un gaz, tels que les isotopes de l'uranium contenus dans l'hexafluorure de ce métal, ou que les isotopes de l'hydrogène (deutérium, tritium), du lithium, du bore, du gadolinium...

L'invention concerne plus particulièrement la technique selon laquelle on applique au fluide concerné, contenu dans une chambre appropriée, un champ de séparation ou d'entraînement susceptible d'agir spécifiquement sur les particules à séparer de façon à les déplacer d'une première zone de la chambre vers une autre zone où la concentration en ces particules s'accroît du fait de ces déplacements.

Les solutions proposées jusqu'à ce jour pour cette technique sont essentiellement de trois types.

Dans les solutions du premier type, le champ d'entraînement est appliqué sur le fluide selon la direction même de l'entraînement, entre deux extrémités mutuellement éloignées de la chambre correspondant respectivement à son "entrée" ou zone destinée à être appauvrie en les particules à séparer et à sa "sortie" ou zone destinée à être enrichie en lesdites particules : une telle solution exige pour le champ une valeur relativement élevée et l'augmentation de cette valeur de champ est rapidement limitée par le prix de l'appareillage correspondant.

Dans les solutions du second type, l'entraînement est obtenu par création d'une onde électrique propagative tout le long de la chambre (voir l'article dû à R. Hagedorn, G. Fuhr, T. Müller et J. Gimsa paru aux pages 49-54 du Volume 13 (1992) de la revue "Electrophoresis").

Pour cela, on donne au moins partiellement à ladite chambre la forme d'un couloir délimité en partie par deux faces rapprochées sensiblement parallèles entre elles et parallèles à la direction E d'entraînement ou séparation et on applique le champ polarisant sur le volume de fluide contenu dans ledit couloir selon une direction perpendiculaire à la direction E.

Dans les modes de réalisation proposés pour la mise en oeuvre de cette solution du second type, les champs en question sont électriques et ils doivent être répartis séquentiellement entre un grand nombre d'électrodes distinctes isolées les unes des autres et disposées côte à côte tout au long du couloir.

Les appareillages qui en résultent sont complexes et difficiles à maîtriser.

Dans les solutions du troisième type, le fluide à traiter est un liquide qui est placé dans un couloir légèrement incliné sur l'horizontale et délimité verticalement par deux plaques électrodes parallèles ondulées régulièrement selon des motifs symétriques, les zones en saillie des plaques étant disposées mutuellement en regard deux à deux de façon à créer une succession de zones étranglées et de zones épanouies (brevet AU-B-37 633/78).

Le liquide s'écoule par gravité entre les plaques de fait de leur inclinaison et un potentiel électrique uniforme est appliqué entre les deux plaques, ce qui exerce des sollicitations électriques différenciées sur les différentes particules contenues dans les zones étranglées : il résulte de ces sollicitations différenciées un enrichissement progressif du liquide qui chemine entre les plaques en certaines desdites particules.

L'invention a pour but, surtout, de proposer une autre solution pour la mise en oeuvre de ladite technique de séparation par champ, solution particulièrement simple et facile à maîtriser.

A cet effet, dans les procédés et dispositifs de séparation par champ du genre en question selon l'invention, on prévoit encore dans la chambre qui contient le fluide à traiter une ou plusieurs zones, dites de séparation, qui s'étendent dans la direction E d'entraînement ou séparation et on applique encore de façon simultanée sur l'ensemble de chaque zone un champ excitateur qui varie le long de la direction E selon une courbe constituée par une suite régulière de motifs essentiellement identiques entre eux, la moyenne dudit champ excitateur effectuée à chaque instant le long de la direction E étant essentiellement nulle.

Par opposition à l'art antérieur, lesdits procédés sont essentiellement caractérisés en ce que le fluide demeure immobile dans la zone considérée, en ce que les motifs de la suite sont dissymétriques et en ce que des moyens sont prévus pour faire varier de façon répétitive l'effet du champ excitateur sur les particules contenues dans la zone considérée.

Dans des modes de réalisation préférés desdits procédés, on a recours en outre à l'une et/ou à l'autre des dispositions suivantes :
- les moyens pour faire varier de façon répétitive l'effet du champ excitateur sur les particules à séparer agissent sur l'amplitude de ce champ excitateur,
- les moyens qui agissent sur l'amplitude du champ excitateur font intervenir une suite renouvelée de cycles opératoires composés chacun de deux phases consistant, la première, s'étendant sur une première période, à appliquer simultanément une impulsion du champ excitateursur l'ensemble de chaque zone de séparation, et la seconde, s'étendant sur une seconde période, à supprimer ledit champ,
- dans un procédé selon l'alinéa précédent, la durée de la seconde période de chaque cycle est du même ordre de grandeur ou plus petite que le temps de diffusion des particules à séparer sur une distance égale au pas du réseau constitué par la succession de motifs dissymétriques,
- les moyens qui agissent sur l'amplitude du champ excitateur appliquent ce champ excitateur sur chaque zone de séparation d'une façon sinusoïdale, éventuellement modulée, la période temporelle du signal sinusoïdal étant choisie en fonction des particules à séparer,
- les moyens pour faire varier de façon répétitive l'effet du champ excitateur sur les particules à séparer agissent sur la sensibilité à ce champ desdites particules,
- dans un procédé selon l'alinéa précédent, on superpose au champ excitateur, sur l'ensemble des zones de séparation, un champ sensibilisateur capable d'induire de façon transitoire la transition des particules à séparer vers un état dans lequel leur sensibilité au champ excitateur est différente de celle qu'elles ont dans leur état fondamental,
- chaque motif présente la forme d'un V dissymétrique,
- la dissymétrie de chaque V, exprimée par un rapport entre la longueur de la projection sur la direction de séparation E de son côté le moins raide et celle de son côté le plus raide, est de l'ordre de 10.

Pour ce qui est des dispositifs de séparation du genre en question selon l'invention, ceux pour lesquels le champ excitateur est d'un type électrique sont essentiellement caractérisés en ce que chaque zone de séparation est délimitée par au moins deux électrodes, en ce que l'une au moins desdites électrodes présente le long de la direction E un profil constitué par la suite régulière ci-dessus de motifs dissymétriques identiques entre eux, motifs ci-après désignés "stries" et en ce qu'il comprend des moyens pour faire varier de façon répétitive l'effet du champ excitateur.

Dans des modes de réalisation préférés desdits dispositifs, on a recours en outre à l'une et/ou à l'autre des dispositions suivantes :
- le pas du réseau de stries est compris entre quelques milliers d'Angströms et quelques millimètres,
- l'électrode striée est côtoyée par une seconde électrode striée identique décalée, notamment d'un demi-pas de striure, par rapport à la première et des moyens sont prévus pour mettre alternativement sous tension ces deux électrodes,
- les zones de séparation ont la forme d'un couloir délimité en partie par deux faces rapprochées sensiblement parallèles entre elles et à la direction E d'entraînement ou séparation et la distance moyenne entre ces deux faces est de l'ordre de grandeur du pas de réseau de stries,
- les deux faces parallèles qui délimitent le couloir sont striées identiquement et sont disposées de façon telle que leurs arêtes se trouvent deux à deux en regard les unes des autres de part et d'autre dudit couloir,
- le couloir est constitué par une pluralité de tronçons de couloir constitués selon l'alinéa précédent, parallèles les uns aux autres, chaque électrode comprise entre deux tronçons de couloir parallèles contigus se présentant alors sous la forme d'une pièce hérissée de stries sur deux faces opposées parallèles, ce qui lui confère un profil général en forme de sapin allongé,
- les électrodes ont subi un traitement de surface permettant d'empêcher l'adhésion sur elles des particules à séparer.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

La figure 1, de ces dessins, est une coupe partielle fortement agrandie d'un dispositif de séparation conforme à l'invention.

Les figures 2 et 3 sont des graphiques explicatifs.

La figure 4 -décomposée en cinq figures 4a, 4b, 4c, 4d et 4e- montre la forme de tensions électriques susceptibles d'engendrer le champ excitateur dans le dispositif selon la figure 1.

La figure 5 montre schématiquement d'une façon plus complète que la figure 1 le même dispositif.

Les figures 6 et 7 sont des schémas représentant deux variantes de dispositifs séparateurs selon l'invention.

Les figures 8 et 9 montrent schématiquement deux coupes perpendiculaires entre elles, selon respectivement VIII-VIII, figure 9 et IX-IX, figure 8, d'une variante encore conforme à l'invention du dispositif de séparation de la figure 1.

La figure 10 montre encore un dispositif séparateur selon l'invention du genre de celui de la figure 1, mais utilisé différemment.

Comme dit plus haut, on se propose de séparer d'un fluide 1 qui peut être liquide ou gazeux certaines particules 2 qui sont dissoutes ou en suspension dans ce fluide.

Le diamètre de ces particules est petit, étant en général inférieur à 1 mm, et même à 0,1 mm, mais pouvant atteindre dans certains cas 3 et même 5 mm.

A cet effet, on applique sur lesdites particules un champ excitateur auquel certaines d'entre elles sont plus sensibles que d'autres ou que le milieu environnant et on exploite l'effet excitateur différencié qui en résulte pour déplacer une majorité desdites particules selon une direction donnée E d'entraînement ou séparation.

A cet effet, on dispose le fluide 1 dans un couloir C de faible hauteur ou largeur moyenne h qui est délimité en partie par deux parois généralement parallèles 3 et 4 métalliques constituant des électrodes.

L'une de ces électrodes 3 est plate et l'autre électrode 4 présente, du coté du couloir C, une face "blasée" ou striée 5.

Le profil de cette face 5 est ici un profil en dents de scie dissymétriques : la largeur A du côté le moins raide est beaucoup plus grande que la largeur B du côté le plus raide, le rapport A/B étant avantageusement de l'ordre de 10, ou plus.

Le pas du réseau, qui est égal à la somme A+B, est typiquement compris entre quelques milliers d'Angströms et quelques millimètres.

La hauteur h est du même ordre de grandeur que ce pas.

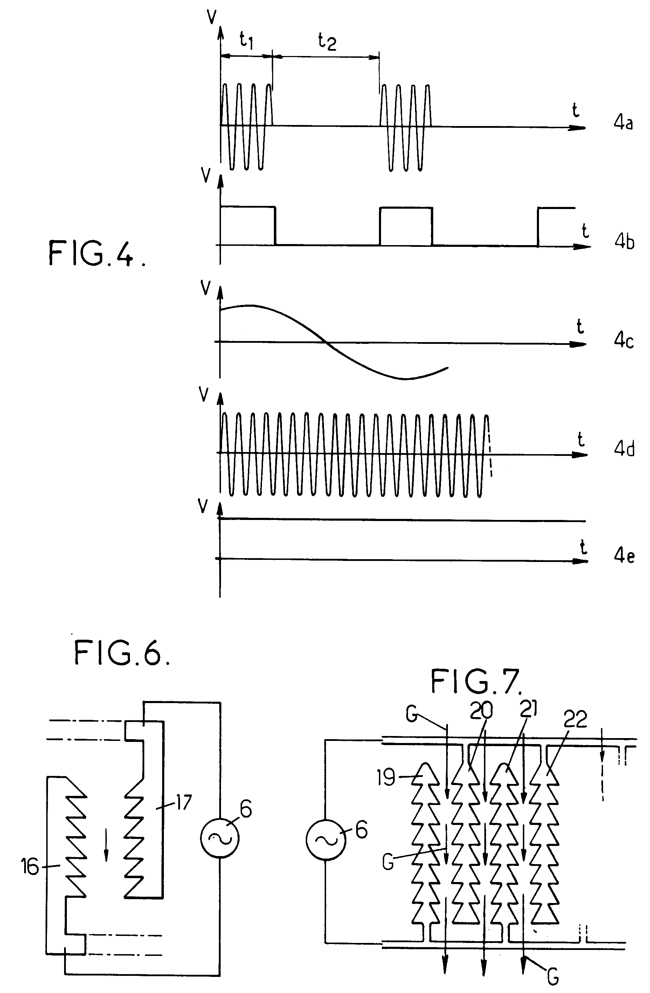

Une source 6 de différence de potentiel est branchée entre les deux électrodes 3 et 4. Cette différence de potentiel ou tension V varie avantageusement de la manière illustrée sur le graphique de la figure 4a où l'on a porté l'amplitude de la tension V en ordonnées et le temps t en abscisses.

On voit que les variations de cette tension V sont cycliques et que chaque cycle comprend une première phase, de durée t₁, correspondant à une impulsion de tension, qui est alternative dans l'exemple donné, et une seconde phase de durée t₂ correspondant à une absence de tension.

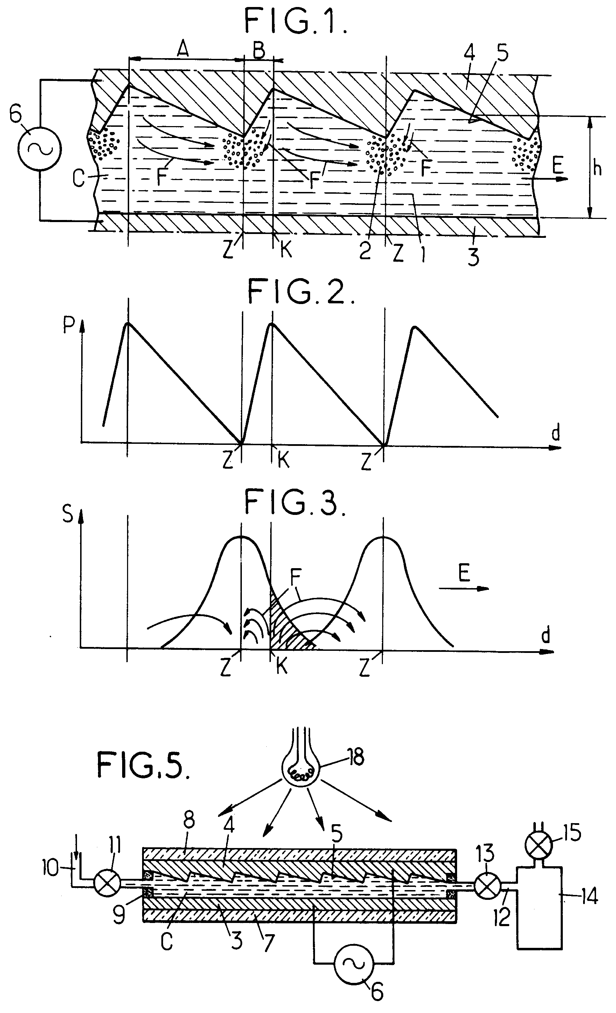

Les figures 2 et 3 sont des graphiques permettant d'expliquer le fonctionnement de la séparation de particules selon la présente invention.

Sur chacune de ces deux figures 2 et 3, on a porté en abscisses exactement les mêmes distances d que sur la figure 1, disposées verticalement en regard de celles-ci.

Sur la figure 2, on a porté en ordonnées et de façon schématique le potentiel excitateur effectif P agissant sur les particules 2, c'est-à-dire la tendance qu'a chacune de ces particules à s'écarter de la position où elle se trouve pour gagner une autre position.

Sur la figure 3, on a porté en ordonnées la concentration S en particules que l'on désire séparer, à un instant bien précis du processus de séparation.

La figure 1 correspond à l'application de l'impulsion de tension, de durée t₁, qui crée le champ excitateur d'origine électrique dans le fluide 1.

A cet instant, le champ électrique qui règne dans le fluide 1 est le plus intense au voisinage des arêtes de la face striée 5, qui sont les plus proches de l'électrode 3 en regard.

Les particules 2 à séparer présentent la caractéristique qu'elles ont une sensibilité au champ électrique différente de celle du milieu environnant ou des autres particules en ce sens qu'elles ont plus tendance que ce milieu ou que ces autres particules à se rassembler dans les zones de concentration dudit champ électrique ou au contraire à éviter ces zones, tendance qui se traduit par l'effet excitateur représenté par le potentiel P ci-dessus.

A titre d'exemple purement illustratif, on suppose que les particules 2 ici considérées présentent la première de ces deux caractéristiques : on observe donc ici une concentration des particules 2 à séparer dans les zones Z qui se trouvent au voisinage des arêtes des stries de la face blasée 5.

Cette concentration se fait par migration des particules environnantes en direction de ces zones Z, selon les flèches F.

Comme visible en effet sur la figure 2, c'est vers les zones Z considérées, correspondant à des étranglements du couloir et à des champs électriques élevés, que les particules ont le plus tendance à migrer pour s'y rassembler de façon stable alors qu'au contraire la faiblesse relative du champ électrique au droit des creux de la surface striée se traduit par une instabilité maximum des particules situées dans les régions correspondantes K.

On voit sur ladite figure 2 non seulement les dissymétries locales du potentiel excitateur P, mais aussi l'allure horizontale plate et non pas inclinée de ses variations à grande échelle, ce qui correspond à une moyenne globalement nulle du champ électrique -c'est-à-dire des variations de la différence de potentiel électrique qui engendre ce champ- le long de la direction générale du couloir C à chaque instant.

A la fin de chaque impulsion de tension de durée t₁, le champ électrique est supprimé.

A partir de cet instant, et pendant toute la seconde durée t₂ de chaque cycle, les particules 2 diffusent d'une manière isotrope de part et d'autre des zones Z à forte concentration précédemment définies.

Juste avant qu'une nouvelle impulsion de tension soit appliquée, correspondant au cycle suivant, la concentration en lesdites particules 2 dans le fluide 1 est donnée par des courbes en cloche telles que celles représentées sur la figure 3.

Lorsqu'on applique à nouveau l'impulsion de tension de durée t₁ correspondant au cycle suivant, on observe à nouveau les migrations dissymétriques qui ont été décrites ci-dessus vers les zones Z à forte concentration qui se trouvent au voisinage des arêtes ci-dessus, et ce selon les flèches F des figures 1 et 3.

Si l'on observe la figure 3, on se rend compte que cette migration a pour effet de faire passer de l'une des cloches (à gauche sur la figure 3) dans l'autre une certaine proportion des particules qui se trouvaient préalablement dans la première, proportion schématisée par la zone hachurée sur ladite figure 3.

Certes, une autre proportion non négligeable, et qui peut même être majoritaire, des particules 2 retourne vers sa position initiale.

Mais le bilan est loin d'être négligeable et il se traduit par un transfert de particules 2 dans le sens de la flèche E, c'est-à-dire vers la droite sur les dessins.

Ce processus se répète pour chaque cycle et pour chaque motif dissymétrique de l'électrode 4.

En somme, on observe une suite de cycles focalisation-dispersion comprenant chacun une première phase focalisation dissymétrique (s'étendant sur un temps t₁) et aboutissant à une répartition inhomogène des particules à séparer et une seconde phase de dispersion symétrique (s'étendant sur un temps t₂) imposée à l'ensemble à densité inhomogène ainsi obtenu.

Il est à noter que, pour obtenir l'effet global d'entraînement selon l'invention, les particules à séparer doivent subir une successsion de périodes de temps ou phases, au cours desquelles elles sont tour à tour focalisées de façon dissymétrique dans des zones Z (phases de focalisation), puis essentiellement libres de diffuser (phases de dispersion), ces deux types de phase étant nécessaires :
- si seule la phase de focalisation était mise en oeuvre, on obtiendrait certes une répartition inhomogène des particules à séparer, mais cette répartition serait limitée dans l'espace à la dimension d'un motif dissymétrique unique : la seconde phase est nécessaire pour exploiter l'inhomogènéité réalisée en extrayant de l'espace correspondant à un motif une partie des particules qui s'y trouvent pour les faire passer au niveau d'un motif voisin,
- si seule la phase de dispersion était mise en oeuvre, on n'observerait aucun effet directionnel dans la répartition des particules à séparer, les changements imposés à une répartition éventuellement inhomogène à l'origine modifiant cette répartition d'une façon identique dans les deux sens de déplacement possibles des particules.

Dans le mode préféré de mise en oeuvre décrit ci-dessus, l'alternance des phases de focalisation et de dispersion est obtenue par l'interruption périodique du champ excitateur d'origine électrique.

D'autres moyens d'obtenir cette alternance peuvent être employés dans le cadre de l'invention, parmi lesquels la modulation temporelle appropriée de l'amplitude du champ électrique ou l'adjonction d'un champ sensibilisateur.

En ce qui concerne le premier moyen, le champ électrique, alternatif ou continu, peut être modulé en amplitude, par exemple sinusoïdalement, de façon à imposer la focalisation des particules pendant les périodes où son amplitude est forte et autoriser leur dispersion pendant les périodes où son amplitude est faible : la demi-période de la modulation joue alors approximativement le rôle de la durée (t₁+t₂) des cycles ci-dessus faisant intervenir l'interruption périodique du champ électrique.

En ce qui concerne le second moyen, l'alternance des phases peut être obtenue en adjoignant au champ excitateur un champ sensibilisateur.

Un tel champ sensibilisateur est par exemple celui produit par l'irradiation à l'aide d'un rayonnement lumineux à même d'amener les particules dans un état activé dans lequel leur sensibilité au champ électrique est plus grande que dans leur état de base appelé état fondamental, état auquel les particules retournent spontanément après avoir passé un certain temps dans l'état activé : la différence de sensibilité induite par une telle activation se traduit par une succession de cycles comprenant chacun une phase de focalisation correspondant à une période ou les particules sont dans leur état activé, et une phase de dispersion correspondant à une période où lesdites particules sont dans leur état fondamental, la durée relative des deux phases dans chaque cycle étant contrôlable par le choix de l'amplitude du rayonnement sensibilisateur ou par son interruption périodique dans le temps.

Il est à noter que, dans ce dernier cas de l'adjonction d'un champ sensibilisateur, il est inutile d'influer temporellement sur le champ excitateur d'origine électrique pour produire l'alternance de phases et donc l'effet d'entraînement.

Dans tous les cas, le déplacement d'ensemble selon la flèche E est obtenu sans qu'il soit nécessaire de recourir à un champ d'entraînement parallèle à la direction de cette flèche.

La séparation obtenue résulte du fait, pour des particules dont certains des paramètres tels que le coefficient de diffusion, la sensibilité au champ électrique, le temps de relaxation diélectrique ou la capacité à être excitée par un rayonnement sont différents, les proportions, de ces particules, qui évoluent de motif en motif selon la flèche E à chaque cycle sont différentes.

La figure 4 montre des séquences temporelles préférées pour la tension électrique, engendrée par le générateur 6, qui crée le champ excitateur.

Dans le cas d'une interruption périodique du champ électrique, le générateur 6 peut par exemple délivrer
- la tension montrée sur la figure 4a déjà commentée plus haut, correspondant à une série d'impulsions de tension alternative dont la fréquence peut par exemple être de l'ordre de quelques centaines ou quelques milliers de Hertz,
- ou des impulsions de tension continue, auquel cas la courbe de la tension à l'allure d'un zig-zag carré représentée en figure 4b.

Dans chacun de ces deux cas, la période t₂ des interruptions est avantageusement choisie du même ordre de grandeur que le temps de diffusion des particules sur un pas de réseau de stries.

Dans le cas d'une modulation temporelle de l'amplitude du champ électrique, le générateur 6 délivre une tension modulée, par exemple une sinusoïde telle que représentée en figure 4c, la fréquence de cette sinusoïde étant, dans certains cas, avantageusement choisie de l'ordre de grandeur de l'inverse du temps de relaxation diélectrique des particules à séparer ou entraîner, et le pas du réseau de stries étant alors choisi tel que le temps de diffusion d'une particule sur ce pas soit de l'ordre de grandeur dudit temps de relaxation diélectrique.

Dans le cas de l'adjonction d'un champ sensibilisateur, on peut par exemple utiliser, comme schématisé sur la figure 5 -qui montre de manière encore schématique, mais plus complète que la figure 1, un mode de réalisation de l'invention-, l'irradiation par un rayonnement sensibilisateur lumineux provenant d'une lampe 18 : dans ce cas, la lampe 18 est allumée de façon à irradier la zone de séparation, et le générateur 6 délivre une tension alternative ou continue sans modulation plus particulière, par exemple telle que représentée sur la figure 4d ou 4e.

Dans un mode de réalisation préféré, la puissance du rayonnement fourni par la lampe 18 est choisie de sorte que le temps de séjour dans l'état fondamental pour une particule soit de l'ordre de grandeur du temps de diffusion de cette particule sur une distance égale au pas du réseau de stries.

Dans un autre mode de réalisation préféré, la lampe 18 rayonne une puissance importante, mais est périodiquement éteinte ou occultée, la durée des périodes d'extinction étant avantageusement choisie de l'ordre de grandeur du temps de diffusion des particules sur un pas du réseau de stries.

On retrouve encore sur la figure 5 les deux électrodes 3 et 4 et le couloir C.

L'électrode 3 est par exemple constituée par un revêtement conducteur et transparent, notamment en oxyde d'indium et d'étain (ITO), d'une plaque de verre 7.

Le réseau blasé conducteur constitutif de l'électrode 4 est également rapporté sur une feuille de verre 8 et formé notamment par empreinte d'une couche d'or ou d'alumimium.

Les deux plaques composites délimitant le couloir C sont entretoisées par un cadre écarteur 9 constitué en une résine isolante.

Le couloir C est en outre connecté à une entrée 10 équipée d'une vanne 11 et à une sortie 12 équipée d'une vanne 13.

Cette sortie 12 est elle-même connectée à un récipient de collecte 14 à vanne d'accès 15.

On comprend facilement qu'avec une telle installation, et tout en prenant bien entendu les précautions nécessaires pour éviter tout "recul" des particules en cours de séparation, il est possible de recueillir dans le récipient 14 des volumes, du fluide 1, enrichis en les particules 2, les collectes de ce fluide enrichi étant compensées par des admissions équivalentes de fluide normal à l'entrée 10.

Dans une variante perfectionnée, les deux électrodes qui délimitent le couloir C dans lequel se trouve le fluide 1 à traiter sont délimitées, du côté de ce couloir, par des faces striées identiquement de façon telle que leurs arêtes se trouvent transversalement en regard les unes des autres, ce qui améliore la performance de l'appareil.

C'est ce qui a été schématisé sur la figure 6, où les deux électrodes striées, en forme de peignes en vis-à-vis, sont désignées respectivement par les références 16 et 17.

Dans ce cas, les deux électrodes 16 et 17 peuvent former les parois latérales du couloir C, les deux autres parois de ce couloir étant avantageusement constituées par des plaques plates en matériau isolant, tel que du verre ou de l'oxyde de silicium, contre l'une desquelles sont appliquées lesdites électrodes.

Lesdites "parois latérales", délimitées par des faces striées en regard, peuvent alors présenter, selon la direction perpendiculaire aux plaques, une dimension très petite qui peut se limiter à l'épaisseur d'une gravure métallique effectuée sur l'une de ces plaques, par exemple par un procédé lithographique.

Selon une variante encore perfectionnée de la précédente, schématisée sur la figure 7, le couloir C est constitué par une pluralité de couloirs parallèles dont les deux parois latérales sont striées identiquement : chacune des électrodes successives 19, 20, 21, 22... est alors constituée par un élément allongé strié sur deux faces opposées qui délimitent respectivement deux couloirs contigus, ce qui lui donne une forme de "sapin".

Dans ce cas, les électrodes successives en question 19, 20, 21, 22, etc. sont connectées électriquement à tour de rôle aux deux bornes du générateur de tension 6, au niveau respectivement de leurs pieds, pour la première, 19, la troisième, 21, etc. et au niveau de leurs cimes pour les autres 20, 22 etc. qui sont intercalées entre les premières.

Ici encore, comme dans le cas de la figure 7, les électrodes ou "sapins" sont avantageusement placés entre deux plaques isolantes, la distance mutuelle entre les électrodes étant avantageusement de l'ordre de grandeur du pas des stries formant les branches des sapins.

Les flèches G de la figure 7 montrent la direction d'entraînement des particules séparées à l'aide d'une telle structure, laquelle permet de disposer d'un très grand nombre de petits motifs élémentaires dissymétriques de séparation dans un espace donné.

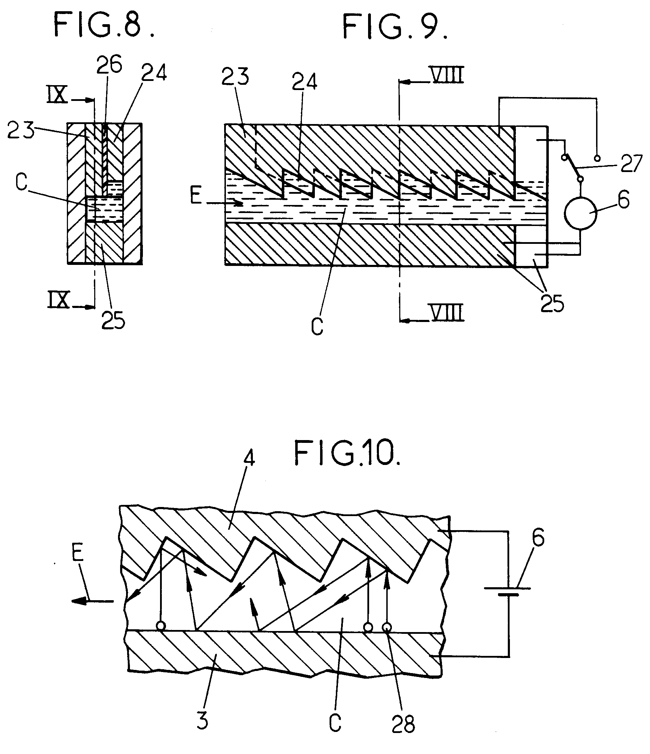

Dans une variante intéressante qui a été schématisée sur les figures 8 et 9, chaque électrode striée ou "peigne" (c'est-à-dire l'électrode striée unique des figures 1 et 5 ou chacune des deux électrodes striées des figures 6 et 7), électrode ici désignée par la référence 23, est dédoublée, c'est-à-dire côtoyée par une seconde électrode striée ou "peigne" 24 identique, mais décalée selon la direction E d'un demi-pas de striure.

Les deux peignes 23 et 24 sont associés à une même contre-électrode 25 qui se trouve de l'autre côté du couloir C.

La face, de cette contre-électrode 25, qui est tournée vers les peignes en regard (23, 24), peut être lisse, comme illustré, ou elle-même striée d'une façon identique à celles des peignes 23 et 24.

Les deux peignes 23 et 24 sont isolés électriquement l'un de l'autre, étant avantageusement juxtaposés côte à côte avec interposition d'une mince couche 26 de matériau isolant.

Les deux paires d'électrodes constituées respectivement par le peigne 23 et la contre-électrode 25, d'une part, et par le peigne 24 et la contre-électrode 25, d'autre part, sont excitées à tour de rôle à partir de la source 6 par l'intermédiaire d'un commutateur approprié 27.

Dans cette variante, la mise sous tension d'un peigne quelconque ou "premier peigne" 23 (c'est-à-dire le branchement de la source 6 entre ce peigne 23 et la contre-électrode 25 correspondante), joue un rôle de focalisation identique à celui joué par la mise sous tension du peigne unique 4 de la figure 1.

Mais entre les phases de mise sous tension successives dudit premier peigne, on ne trouve plus de phase sous champ excitateur correspondant à une dispersion isotrope des particules précédemment focalisées : les phases de dispersion sont ici remplacées par de nouvelles phases de focalisation qui sont prises en charge par les mises sous tension successives du second peigne 24.

Dans la variante schématisée sur la figure 10, le dispositif de séparation est semblable à celui de la figure 1.

Mais ici, les particules à séparer sont des billes ou grains 28 de diamètre plus grand que précédemment, ce diamètre étant compris entre 0,5 et 5 mm et elles se trouvent dans l'air ambiant.

Ces billes ou grains sont constituées en tout matériau désirable et en particulier en métal, en matière plastique ou en une matière minérale telle que de la silice.

Les deux électrodes 3 et 4 sont horizontales et encore reliées entre elles par l'intermédiaire d'une source 6 qui est ici une source de différence de potentiel électrique continue.

Dans le cas où les grains 28 sont en métal, ceux qui sont en contact avec l'électrode inférieure 3 se chargent progressivement à la même polarité que cette électrode.

Dès que la charge d'un tel grain dépasse un seuil donné correspondant à son poids, ce grain s'élève jusqu'à toucher l'électrode supérieure 4.

Ce contact a le double effet de décharger électriquement ledit grain et de lui faire subir une réflexion mécanique sur l'électrode 4 : il retombe alors vers l'électrode inférieure 3 selon une direction mécaniquement "réfléchie" par rapport à la direction de son ascension préalable.

Il est clair que, statistiquement, en raison de la dissymétrie des motifs, les réflexions effectuées sur la surface striée de l'électrode 4 se traduisent par un déplacement majoritaire des particules réfléchies dans le sens de la flèche E de la figure 10 et que le degré de l'entraînement résultant dépend des caractéristiques (notamment diamètre) des grains considérés.

En d'autres termes, le "pompage" observé est alors dû essentiellement aux réflexions mécaniques des grains 28 sur les pentes dissymétriques des motifs lorsque ces grains sont déplacés par le champ électrique transversal.

Le fonctionnement de cette variante est conforme à la définition générale donnée ci-dessus de l'invention.

On peut en effet considérer qu'un champ électrique transversal de polarité donnée est appliqué sur chaque grain 28 lors de sa charge au voisinage de l'électrode inférieure 3, puis de son ascension vers l'autre électrode 4, et que ce champ est "interrompu" (étant inversé) dès la mise en contact dudit grain avec ladite électrode supérieure 4, puis pendant la descente du grain jusqu'à son nouveau contact avec l'électrode inférieure 3, ce qui amorce sa nouvelle charge électrique à la première polarité ci-dessus, et ainsi de suite : on observe donc bien une interruption répétitive du champ excitateur considéré.

Un raisonnement tout à fait analogue pourrait être tenu si le grain 28 considéré était constitué en un matériau isolant plutôt qu'en un matériau conducteur.

Dans chaque cas, il peut être avantageux de revêtir les faces en regard des électrodes d'un produit anti-adhésif empêchant l'adhérence contre elles des particules à séparer.

En suite de quoi et quel que soit le mode de réalisation adopté, on obtient finalement des procédés et dispositifs de séparation de particules contenues dans un fluide dont, respectivement, la mise en oeuvre et la constitution résultent suffisamment de ce qui précède.

Ces procédés et dispositifs présentent de nombreux avantages par rapport à ceux antérieurement connus, en particulier au niveau de l'économie et de la facilité de la commande, en particulier pour les raisons suivantes :
- l'application du champ polarisant ou excitateur sur la masse totale du fluide à traiter, contenu dans son couloir de traitement, peut être effectuée transversalement à ce couloir, et non longitudinalement entre ses deux extrémités, ce qui permet de réduire considérablement l'amplitude du paramètre excitateur correspondant, cette amplitude, dans le cas où ledit paramètre est une tension électrique, étant notamment abaissée de plusieurs milliers de Volts à quelques Volts seulement,
- pour appliquer sur toute la masse du fluide à traiter, contenu dans son couloir de traitement, le champ polarisant ou excitateur qui présente une répartition en dents de scie dissymétriques tout au long dudit couloir, il suffit d'engendrer un tel champ unique et de l'appliquer simultanément à toute la longueur de chaque électrode ou analogue longeant ledit couloir, la répartition ci-dessus étant intégralement prise en charge par une configuration statique de ladite électrode, laquelle présente précisément un profil longitudinal correspondant à ladite répartition : en d'autres termes, il est inutile de décomposer chaque électrode en une pluralité d'électrodes contiguës et indépendantes alimentées indépendamment les unes des autres.

On donne ci-après à titre purement indicatif deux exemples de réalisation.

Le premier exemple est conforme à la figure 7, avec une excitation conforme à la figure 4a. Les électrodes adjacentes 19 sont écartées de 5 µm et le pas du motif strié de chacune de ces électrodes est de 50 µm.Entreles électrodes est placée une solution aqueuse, dite "tampon tris-borate", de tris-(hydroxyméthyl)-aminométhane 44,5 mM (44,50 millimolaire) et d'acide borique 44,5 mM dans laquelle sont suspendues des particules de latex sensiblement sphériques dont les diamètres sont de l'ordre de 1, de 0,40 et de 0,25 µm.

On applique entre les électrodes une différence de potentiel électrique dont l'amplitude est de 10 Volts et la fréquence de 800 kHz, et ce de façon répétitive, chaque cycle comprenant une période d'excitation de 30 secondes suivie d'une période de repos de 50 secondes.

Comme résultat, on observe des déplacements des particules d'autant plus rapides que ces particules sont plus petites, les vitesses moyennes mesurées étant respectivement de 0,08, de 0,15 et de 0,25 µm/s pour respectivement les trois diamètres ci-dessus indiqués, dans l'ordre décroissant.

Le deuxième exemple est conforme à la figure 10. Les électrodes 3 et 4 sont constituées en laiton, le pas des stries de l'électrode 4 est de 5 mm, la profondeur de ces stries est de 2 mm et l'un des côtés de chaque strie est vertical. L'écartement entre les deux électrodes est de 4 mm et la longueur du couloir C est de l'ordre de 10 cm. Le fluide dans lequel s'effectue la séparation est de l'air et il contient des billes en acier présentant des diamètres de 1,5 mm et de 1 mm.

La différence de potentiel électrique appliquée entre les électrodes est continue et présente une amplitude de 6 kV.

Comme résultat, on observe une séparation quasiment complète des billes de tailles différentes au bout d'une minute environ, les plus petites s'étant rassemblées à une extrémité du couloir C.

Comme il va de soi, et comme il résulte d'ailleurs déjà de ce qui précède, l'invention ne se limite nullement à ceux de ses modes d'application et de réalisation qui ont été plus spécialement envisagés. Le champ excitateur peut-être d'un type autre qu'électrique, par exemple électromagnétique, optique ou gravitationnel, les motifs dissymétriques étant par exemple, dans ce dernier cas, des reliefs d'une plaque essentiellement horizontale, cette plaque étant elle-même mise en vibration par des moyens appropriés, les particules à séparer ayant alors tendance à migrer de motif en motif le long de la surface de ladite plaque.

## Revendications

1. Procédé pour séparer au sein d'un fluide (1) certaines des particules (2) contenues dans celui-ci, selon lequel on dispose ce fluide dans une zone, dite de séparation, d'une chambre (C), qui s'étend selon la direction de séparation E et on applique de façon simultanée sur l'ensemble de ladite zone un champ excitateur qui varie le long de la direction E selon une courbe constituée par une suite régulière de motifs essentiellement identiques entre eux, la moyenne dudit champ excitateur effectuée à chaque instant le long de la direction E étant essentiellement nulle, caractérisé en ce que le fluide demeure immobile dans la zone considérée, en ce que les motifs de la suite sont dissymétriques, et en ce que des moyens sont prévus pour faire varier de façon répétitive l'effet du champ excitateur sur les particules contenues dans la zone considérée.

2. Procédé selon la revendication 1, caractérisé en ce que les moyens pour faire varier de façon répétitive l'effet du champ excitateur sur les particules à séparer agissent sur l'amplitude de ce champ excitateur.

3. Procédé selon la revendication 2, caractérisé en ce que les moyens qui agissent sur l'amplitude du champ excitateur font intervenir une suite renouvelée de cycles opératoires composés chacun de deux phases consistant, la première, s'étendant sur une première période (t₁), à appliquer simultanément une impulsion du champ excitateur sur l'ensemble de chaque zone de séparation, et la seconde, s'étendant sur une seconde période (t₂), à supprimer ledit champ.

4. Procédé selon la revendication 3, caractérisé en ce que la durée de la seconde période (t₂) de chaque cycle est du même ordre de grandeur ou plus petite que le temps de diffusion des particules à séparer sur une distance égale au pas du réseau constitué par la succession de motifs dissymétriques.

5. Procédé selon la revendication 2, caractérisé en ce que les moyens qui agissent sur l'amplitude du champ excitateur appliquent ce champ excitateur sur chaque zone de séparation d'une façon sinusoïdale, éventuellement modulée, la période temporelle du signal sinusoïdal étant choisie en fonction des particules à séparer.

6. Procédé selon la revendication 1, caractérisé en ce que les moyens pour faire varier de façon répétitive l'effet du champ excitateur sur les particules à séparer agissent sur la sensibilité à ce champ desdites particules.

7. Procédé selon la revendication 6, caractérisé en ce que l'on superpose au champ excitateur, sur l'ensemble des zones de séparation, un champ sensibilisateur capable d'induire de façon transitoire la transition des particules à séparer vers un état dans lequel leur sensibilité au champ excitateur est différente de celle qu'elles ont dans leur état fondamental.

8. Procédé selon l'une quelconque des précédentes revendications, caractérisé en ce que chaque motif présente la forme d'un V dissymétrique.

9. Procédé selon la revendication 8, caractérisé en ce que la dissymétrie de chaque V, exprimée par un rapport entre la longueur de la projection sur la direction de séparation E de son côté le moins raide et celle de son côté le plus raide, est de l'ordre de 10.

10. Dispositif de séparation pour mettre en oeuvre le procédé selon l'une quelconque des précédentes revendications, pour lequel le champ excitateur est d'un type électrique, caractérisé en ce que chaque zone de séparation est délimitée par au moins deux électrodes (3,4), en ce que l'une au moins desdites électrodes (4) présente le long de la direction de séparation E un profil (5) constitué par une suite régulière de motifs dissymétriques identiques entre eux, motifs ci-après désignés "stries" et en ce qu'il comprend des moyens pour faire varier de façon répétitive l'effet du champ excitateur.

11. Dispositif selon la revendication 10, caractérisé en ce que le pas du réseau de stries est compris entre quelques milliers d'Angströms et quelques millimètres.

12. Dispositif selon l'une quelconque des revendications 10 et 11, caractérisé en ce que l'électrode striée (23) est côtoyée par une seconde électrode striée identique (24) décalée, notamment d'un demi-pas, par rapport à la première et en ce que des moyens (27) sont prévus pour mettre alternativement sous tension ces deux électrodes.

13. Dispositif selon l'une quelconque des revendications 10 à 12, caractérisé en ce que les zones de séparation ont la forme d'un couloir (C) délimité en partie par deux faces rapprochées sensiblement parallèles entre elles et à la direction E d'entraînement ou séparation et en ce que la distance moyenne entre ces deux faces est de l'ordre de grandeur du pas du réseau de stries.

14. Dispositif selon la revendication 13, caractérisé en ce que les deux faces parallèles qui délimitent le couloir sont striées identiquement et sont disposées de façon telle que leurs arêtes se trouvent deux à deux en regard les unes des autres de part et d'autre dudit couloir.

15. Dispositif selon la revendication 14, caractérisé en ce que le couloir est constitué par une pluralité de tronçons de couloir parallèles les uns aux autres, chaque électrode comprise entre deux tronçons de couloir parallèles contigus se présentant alors sous la forme d'une pièce (19,20,21,22) hérissée de stries sur deux faces opposées parallèles, ce qui lui confère un profil général en forme de sapin allongé.

16. Dispositif selon l'une quelconque des revendications 10 à 15, caractérisé en ce que les électrodes ont subi un traitement de surface permettant d'empêcher l'adhésion sur elles des particules à séparer.

## Claims

1. Method for separating, within a fluid (1), certain particles (2) contained therein, according to which this fluid is arranged in a zone, called the separation zone, of a chamber (C), which extends along the separation direction E and an exciting field is simultaneously applied over the entirety of the said zone, which field varies along the direction E in a curve consisting of a regular sequence of essentially mutually identical patterns, the mean of the said exciting field, taken at each instant along the direction E, being essentially zero, characterized in that the fluid remains stationary in the zone in question, in that the patterns of the sequence are asymmetric, and in that means are provided for repetitively varying the effect of the exciting field on the particles contained in the zone in question.

2. Method according to Claim 1, characterized in that the means for repetitively varying the effect of the exciting field on the particles to be separated act on the amplitude of this exciting field.

3. Method according to Claim 2, characterized in that the means which act on the amplitude of the exciting field employ a repeated sequence of operating cycles, each composed of two phases, the first phase, extending over a first period (t₁), consisting in simultaneously applying a pulse of the exciting field over the entirety of each separation zone, and the second phase, extending over a second period (t₂), consisting in cancelling the said field.

4. Method according to Claim 3, characterized in that the duration of the second period (t₂) of each cycle is of the same order of magnitude as, or shorter than, the diffusion time of the particles to be separated over a distance equal to the pitch of the array consisting of the succession of assymetric patterns.

5. Method according to Claim 2, characterized in that the means which act on the amplitude of the exciting field apply this exciting field to each separation zone in a sinusoidal, optionally modulated, manner, the time period of the sinusoidal signal being chosen depending on the particles to be separated.

6. Method according to claim 1, characterized in that the means for repetitively varying the effect of the exciting field on the particles to be separated act on the sensitivity of the said particles to this field.

7. Method according to claim 6, characterized in that a sensitizing field is superposed on the exciting field over all the separations zones, which sensitizing field is capable of temporarily inducing transition of the particles to be separated into a state in which their sensitivity to the exciting field is different from that which they have in their ground state.

8. Method according to any one of the preceding claims, characterized in that each pattern has the shape of an asymmetric V.

9. Method according to claim 8, characterized in that the asymmetry of each V, expressed as a ratio between the length of the projection on the separation direction E of its less steep side and that of its steeper side, is of the order of 10.

10. Separation device for implementing the method according to any one of the preceding claims, wherein the exciting field is of electric type, characterized in that each separation zone is defined by at least two electrodes (3, 4), in that at least one of the said electrodes (4) has a profile (5), along the separation direction E, which consists of a regular sequence of mutually identical asymmetric patterns, which patterns are referred to hereinbelow as "striae", and in that it includes means for repetitively varying the effect of the exciting field.

11. Device according to claim 10, characterized in that the pitch of the array of striae lies between a few thousands of ångströms and a few millimetres.

12. Device according to any one of claims 10 and 11, characterized in that the striated electrode (23) has a second, identical striated electrode (24) lying alongside it, which second electrode is offset, in particular by one half pitch, with respect to the first, and in that means (27) are provided for alternately powering these two electrodes.

13. Device according to any one of claims 10 to 12, characterized in that the separation zones have the form of a corridor (C) defined in part by two faces which are close together and substantially parallel to each other and to the direction E of entrainment or separation, and in that the mean distance between these two faces is of the order of magnitude of the pitch of the array of striae.

14. Device according to claim 13, characterized in that the two parallel faces which define the corridor are identically striated and are arranged so their edges lie opposite each other in pairs on either side of the said corridor.

15. Device according to claim 14, characterized in that the corridor consists of a plurality of mutually parallel corridor sections, each electrode lying between two adjacent parallel corridor sections then being in the form of a part (19, 20, 21, 22) lined with striae on two parallel opposite faces, which gives it a general elongate Christmas-tree shape.

16. Device according to any one of claims 10 to 15, characterized in that the electrodes have been subjected to a surface treatment making it possible to prevent adhesion onto them by the particles to be separated.

## Patentansprüche

1. Verfahren, um in einem Fluid (1) bestimmte darin enthaltene Teilchen (2) zu trennen, bei welchem Verfahren das Fluid in eine Zone, genannt Trennzone, einer entsprechend der Trennungsrichtung E verlaufenden Kammer (C) gebracht wird und gleichzeitig in der gesamten Zone ein Erregerfeld angelegt wird, das entlang der Richtung E gemäß einer von einer regelmäßigen Folge untereinander im wesentlichen gleicher Muster gebildeten Kurve variiert, wobei der sich zu jedem Zeitpunkt entlang der Richtung E ergebende Mittelwert des Erregerfelds im wesentlichen Null ist,
**dadurch gekennzeichnet**,
daß sich das Fluid in der betrachteten Zone unbeweglich aufhält, daß die Muster der Folge unsymmetrisch sind und daß Mittel vorgesehen sind, um in sich wiederholender Weise die Wirkung des Erregerfelds auf die in der betrachteten Zone enthaltenen Teilchen zu verändern.

2. Verfahren nach Anspruch 1,
**dadurch gekennzeichnet**, daß die Mittel zum sich wiederholenden Verändern der Wirkung des Erregerfelds auf die zu trennenden Teilchen auf die Amplitude des Erregerfelds einwirken.

3. Verfahren nach Anspruch 2,
**dadurch gekennzeichnet**, daß die auf die Amplitude des Erregerfelds einwirkenden Mittel das Auftreten einer wiederholten Folge von Wirkungszyklen bewirken, welche sich jeweils aus zwei Phasen zusammensetzen, deren erste, sich über eine erste Periode (t₁) erstreckende in der gleichzeitigen Anlegung eines Erregerfeldimpulses in der gesamten jeweiligen Trennzone besteht und deren zweite, sich über eine zweite Periode (t₂) erstreckende in der Unterdrückung des Felds besteht.

4. Verfahren nach Anspruch 3,
**dadurch gekennzeichnet**, daß die Zeitdauer der zweiten Periode (t₂) jedes Zyklus von der gleichen Größenordnung oder kleiner ist als die Ausbreitungszeit der zu trennenden Teilchen auf einer Strecke, welche gleich der Schrittweite des von der Aufeinanderfolge unsymmetrischer Muster gebildeten Rasters ist.

5. Verfahren nach Anspruch 2,
**dadurch gekennzeichnet**, daß die auf die Amplitude des Erregerfelds einwirkenden Mittel das Erregerfeld in jeder Trennzone in sinusförmiger, gegebenenfalls modulierter Weise anlegen, wobei die zeitliche Periode des Sinussignals abhängig von den zu trennenden Teilchen gewählt wird.

6. Verfahren nach Anspruch 1,
**dadurch gekennzeichnet**, daß die Mittel zum sich wiederholenden Verändern der Wirkung des Erregerfelds auf die zu trennenden Teilchen auf die Empfindlichkeit der Teilchen gegenüber dem Feld einwirken.

7. Verfahren nach Anspruch 6,
**dadurch gekennzeichnet**, daß in allen Trennzonen dem Erregerfeld ein Sensibilisierungsfeld überlagert wird, welches in der Lage ist, den Übergang der zu trennenden Teilchen in einen Zustand vorübergehend herbeizuführen, in dem sich ihre Empfindlichkeit gegenüber dem Erregerfeld von derjenigen unterscheidet, die sie in ihrem Grundzustand haben.

8. Verfahren nach einem der vorhergehenden Ansprüche,
**dadurch gekennzeichnet**, daß jedes Muster die Form eines unsymmetrischen V besitzt.

9. Verfahren nach Anspruch 8,
**dadurch gekennzeichnet**, daß die Unsymmetrie jedes V, ausgedrückt durch ein Verhältnis zwischen der Länge der Projektion seiner am wenigsten steilen Seite und der seiner steilsten Seite auf die Trennrichtung E, in der Größenordnung von 10 liegt.

10. Trenneinrichtung zur Durchführung des Verfahrens nach einem der vorhergehenden Ansprüche, bei der das Erregerfeld ein elektrisches Feld ist,
**dadurch gekennzeichnet**, daß jede Trennzone von mindestens zwei Elektroden (3,4) begrenzt ist, daß mindestens eine der Elektroden (4) entlang der Trennrichtung E ein Profil (5) aufweist, welches von einer regelmäßigen Folge untereinander gleicher unsymmetrischer Muster gebildet ist, welche Muster nachfolgend "Zahnung" genannt werden, und daß sie Mittel umfaßt, um die Wirkung des Erregerfelds in sich wiederholender Weise zu verändern.

11. Einrichtung nach Anspruch 10,
**dadurch gekennzeichnet**, daß die Schrittweite des Rasters der Zahnung zwischen einigen Tausend Angström und einigen Millimetern liegt.

12. Einrichtung nach einem der Ansprüche 10 und 11,
**dadurch gekennzeichnet**, daß der gezahnten Elektrode (23) eine zweite, gleiche gezahnte Elektrode (24) benachbart ist, welche gegenüber der ersten insbesondere um eine halbe Schrittweite versetzt ist, und daß Mittel (27) vorgesehen sind, um die beiden Elektroden wechselweise unter Spannung zu setzen.

13. Einrichtung nach einem der Ansprüche 10 bis 12,
**dadurch gekennzeichnet**, daß die Trennzonen die Form eines Korridors (C) besitzen, welcher zum Teil von zwei zueinander und zur Mitnahme- oder Trennrichtung E im wesentlichen parallelen, einander gegenüberliegenden Wänden begrenzt ist, und daß der mittlere Abstand zwischen den beiden Wänden in der Größenordnung der Schrittweite des Rasters der Zahnung liegt.

14. Einrichtung nach Anspruch 13,
**dadurch gekennzeichnet**, daß die beiden den Korridor begrenzenden parallelen Wände in gleicher Weise gezahnt sind und derart angeordnet sind, daß ihre Kanten beidseits des Korridors einander paarweise gegenüberliegend angeordnet sind.

15. Einrichtung nach Anspruch 14,
**dadurch gekennzeichnet**, daß der Korridor von einer Mehrzahl zueinander paralleler Teilkorridore gebildet ist, wobei jede zwischen zwei benachbarten parallelen Teilkorridoren angeordnete Elektrode demnach die Form eines an zwei entgegengesetzten parallelen Seiten gezahnten Teils (19, 20, 21, 22) aufweist, was ihr ein Grundprofil in Form eines länglichen Tannenbaums verleiht.

16. Einrichtung nach einem der Ansprüche 10 bis 15,
**dadurch gekennzeichnet**, daß die Elektroden einer Oberflächenbehandlung unterzogen sind, die es ermöglicht, die Anhaftung zu trennender Teilchen an ihnen zu verhindern.
